# FASCICULE DE BREVET EUROPEEN

(11) **EP 0 403 354 B1**
(45) Date de publication et mention de la délivrance du brevet: **17.08.1994**
(21) Numéro de dépôt: 90401596.3
(22) Date de dépôt: 11.06.1990
(51) Int. Cl.: G02B 7/04

(54) **Dispositif de guidage et de manoeuvre d'un élément mobile parallèlement à un axe, et instrument optique le comportant**
Führungsvorrichtung für ein mobiles Element parallel zu einer Achse und Instrument mit einer derartigen Führung
Guide for a mobile element parallel to an axis and an optical instrument incorporating such a guide

(30) Priorité: 12.06.1989 FR 8907738
(43) Date de publication de la demande: 19.12.1990
(73) Titulaire: AEROSPATIALE Société Nationale Industrielle, 75781 Paris Cédex 16 (FR)
(72) Inventeur: Vezain, Gérard, F-06210 Mandelieu (FR)
(74) Mandataire: Rinuy, Santarelli

(56) Documents cités:
- EP-A- 0 176 127
- WO-A-88/04066
- GB-A- 2 090 038
- US-A- 4 614 403

## Description

L'invention concerne la commande en déplacement et le guidage d'un élément mobile qu'il s'agit de déplacer parallèlement à un axe en minimisant toute inclinaison parasite de cet élément mobile par rapport à cet axe.

L'invention vise en particulier, mais non exclusivement, le guidage et la commande en mouvement d'une lentille au sein d'un mécanisme de refocalisation d'instruments optiques ou de télescopes ; il est nécessaire en effet dans de tels instruments optiques de déplacer une ou plusieurs lentilles en vue d'atteindre une mise au point optimale, or ce déplacement doit être réalisé exactement suivant la direction de l'axe optique sur lequel est placée cette lentille.

La qualité de l'image donnée par l'instrument optique considéré est conditionnée par la qualité des lentilles mais aussi par la précision de leur positionnement sur le chemin optique. Il est donc essentiel de guider et commander le déplacement de la lentille de manière à minimiser les défauts de positionnement.

Les défauts de positionnement des lentilles peuvent être de deux types éventuellement combinés :
- il y a tout d'abord le décentrement, c'est-à-dire un défaut de parallaxe entre l'axe de la lentille et l'axe du chemin optique du rayonnement devant traverser la lentille ;
- il y a par ailleurs l'inclinaison (en anglais TILT), c'est-à-dire l'angle qui existe entre l'axe de la lentille et l'axe optique.

C'est le plus souvent ce dernier type de défaut qui est le plus rédhibitoire pour une bonne qualité d'image.

L'invention vise principalement à minimiser, voire supprimer, ce dernier type de défaut tout en réduisant autant que possible le décentrement.

L'invention vise à obtenir le résultat précité d'une manière simple, fiable, peu coûteuse, peu encombrante, en faisant intervenir un guidage mécanique toutefois sans jeu ni frottement, tout en ne nécessitant, a priori, qu'un seul point d'application d'efforts pour la manoeuvre en déplacement.

On connaît déjà d'après le document GB-2.090.038 un dispositif pour supporter et positionner un corps mobile selon deux directions orthogonales par rapport à un cadre fixe. Pour chaque direction sont prévues deux lames flexibles parallèles transversales et en regard l'une de l'autre en étant décalées le long de la direction ; ces lames sont respectivement encastrées en leurs extrémités dans les éléments entre lesquels un débattement selon la direction considérée est recherché. Les distances à cette direction de ces zones d'encastrement sont les mêmes pour chaque lame. L'entraînement en mouvement de l'élément mobile par rapport à l'élément fixe est assuré par des moyens électromagnétiques qui, s'agissant du corps à positionner, entourent complètement ce dernier. Une telle solution se révèle en fait ni simple, ni peu coûteuse, ni peu encombrante et ne permet pas de se contenter d'un seul point d'application pour les efforts de manoeuvre en déplacement. Cette solution ne répond donc pas au problème technique précité.

L'invention propose un dispositif pour régler la position d'un objet, comportant un élément fixe, un élément mobile destiné à supporter ledit objet et des moyens de guidage et de commande en déplacement de l'élément mobile par rapport à l'élément fixe, parallèlement à un axe de translation, les dits moyens comportant au moins une paire de lames planes flexibles parallèles, l'une en face de l'autre, transversales à l'axe, et décalées par rapport à l'axe, respectivement encastrées en leurs extrémités, d'une part dans l'élément mobile, d'autre part dans l'élément fixe, les distances des zones d'encastrement audit axe de translation étant les mêmes pour chaque lame, caractérisé en ce que :
- l'élément mobile comporte un prolongement transversal dont une extrémité est fixée dans la zone d'encastrement de l'élément mobile et qui s'étend approximativement parallèlement aux lames flexibles en direction de l'élément fixe sur au moins la moitié de la distance transversale séparant les zones d'encastrement des lames flexibles dans l'élément mobile et dans l'élément fixe, et en ce que
- un actionneur est disposé en sorte d'exercer un effort sur ce prolongement, parallèlement à l'axe, sensiblement à mi-chemin transversalement entre ces zones d'encastrement.

Selon les dispositions préférées éventuellement combinées de l'invention :
- le prolongement transversal de l'élément mobile se trouve d'un même côté des lames flexibles parallèlement à l'axe ;
- l'actionneur comporte un pointeau en simple appui sur le prolongement, parallèlement à l'axe, les lames flexibles étant élastiques ;
- le prolongement transversal de l'élément mobile se trouve, parallèlement à l'axe, entre l'actionneur et la paire de lames flexibles ;
- ledit axe de translation étant horizontal, l'élément mobile est suspendu à l'élément fixe par ces lames, lesquelles sont symétriques par rapport à un plan vertical contenant cet axe de translation horizontal.

L'invention propose également un instrument optique comportant un élément optique mobile en translation et, pour régler la position de cet élément optique, un dispositif du type précité.

Selon d'autres dispositions de l'invention :
- l'élément optique mobile est une bague dans laquelle est montée une lentille ;
- l'axe de translation est horizontal, la bague étant disposée dans un plan vertical ;
- la bague est reliée au bâti par une seule paire de lames flexibles, symétriques par rapport à un plan vertical contenant l'axe de translation.

Des objets, caractéristiques et avantages de l'invention ressortent de la description qui suit, donnée à titre d'exemple non limitatif, en regard des dessins annexés sur lesquels :
- la figure 1 est une vue en perspective, avec arrachement partiel, d'un dispositif de guidage et de commande en manoeuvre d'un élément optique mobile, en configuration de repos ;
- la figure 2 est une autre vue de ce dispositif en une configuration de translation ;
- la figure 3 est une vue en coupe axiale de ce dispositif ; et
- la figure 4 est un détail de la figure 3 faisant apparaître les forces et couples appliqués.

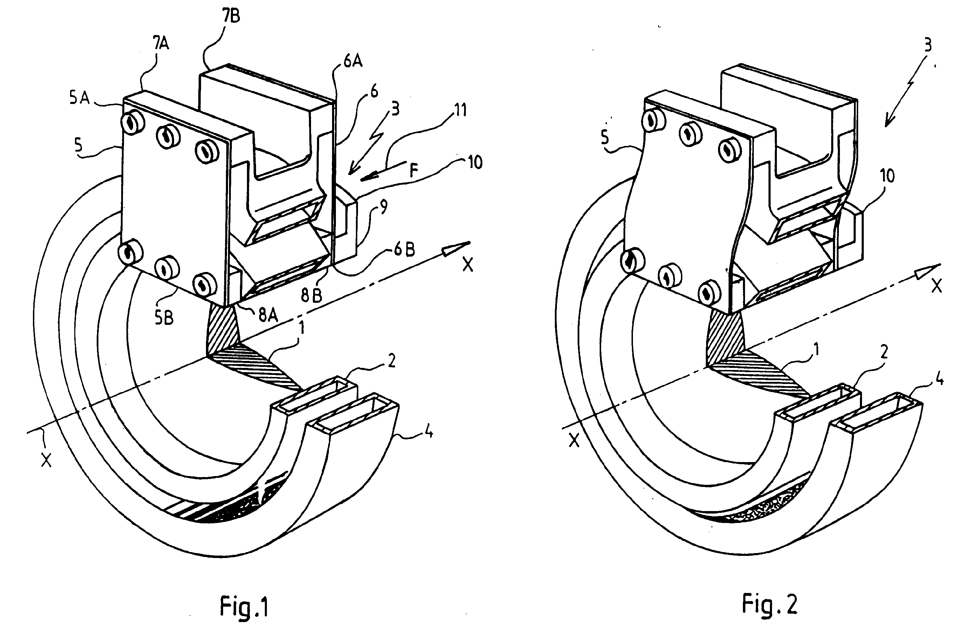

Les figures 1 à 3 représentent le montage d'une lentille 1 que l'on veut déplacer parallèlement à un axe optique X-X caractéristique d'un instrument optique non représenté ici en détail mais de structure classique connue en soi. Il peut s'agir d'un mécanisme de refocalisation

Cette lentille 1 est maintenue sur sa périphérie dans une bague ou virole annulaire 2 reliée par un dispositif, noté 3 dans son ensemble, à un élément fixe par rapport à l'instrument optique, matérialisé ici par une virole concentrique à la virole 2 laquelle sera de ce fait qualifiée de virole mobile interne tandis que l'élément 4 sera qualifié de virole fixe externe.

Le dispositif 3 assure à lui seul le guidage et la commande en déplacement de l'équipage mobile 1 + 2 parallèlement à l'axe optique X-X de l'instrument optique.

Bien entendu, l'axe de la lentille est en principe confondu avec l'axe optique précité.

Le dispositif 3 comporte deux lames planes flexibles 5 et 6 parallèles entre elles, disposées transversalement à l'axe optique X-X. Ces lames sont avantageusement élastiques en flexion.

Ces lames sont de forme rectangulaire, ici de forme approximativement carrée. Elles sont identiques.

Ces lames sont solidaires en leurs extrémités 5A et 5B, 6A et 6B, respectivement de la virole externe 4, et de la virole interne 2 ; cette solidarisation est ici obtenue par collage et/ou boulonnage. Ces extrémités 5A, 5B, 6A et 6B constituent ainsi des zones d'encastrement de même écartement.

Pour faciliter la fixation de ces lames flexibles sur les viroles, malgré la courbure de ces dernières, celles-ci sont munies de barrettes de fixation, repérées 7A, 7B pour ce qui est de la virole externe , et 8A et 8B pour ce qui est de la virole interne. Ces barrettes sont ici d'une seule pièce avec ces viroles.

Ces barrettes de fixation 7A, 7B, 8A, 8B sont en saillie axiale par rapport aux viroles ce qui augmente le débattement axial potentiel de l'équipage mobile 1 + 2 par rapport à la virole externe, grâce à la flexion des lames flexibles.

Il est à noter que les zones d'encastrement des extrémités des lames 5 et 6, ici situées de part et d'autre des viroles 2 et 4, sont respectivement à des distances égales vis à vis de l'axe X-X : distance l pour 5B et 6B et distance L pour 5A et 6A.

D'un côté de la virole interne 2, est par ailleurs fixée une barrette en équerre 9 comportant un flanc 10 transversal à l'axe optique X-X se prolongeant à l'opposé de l'axe X-X vers le corps de l'instrument dont fait partie la virole externe.

Un actionneur 11, de tout type connu approprié, schématisé ici par une flèche F, porté directement ou indirectement par le corps de l'instrument optique, est adapté à agir parallèlement à l'axe optique sur ce flanc 10.

La zone d'application de l'actionneur (par exemple par un doigt mobile ou pointeau que comporte cet actionneur) sur la tranche 10, se trouve, selon l'invention, être sensiblement à mi-chemin, transversalement à l'axe optique, entre le niveau l des barrettes 8A et 8B et celui L des barrettes 7A et 7B.

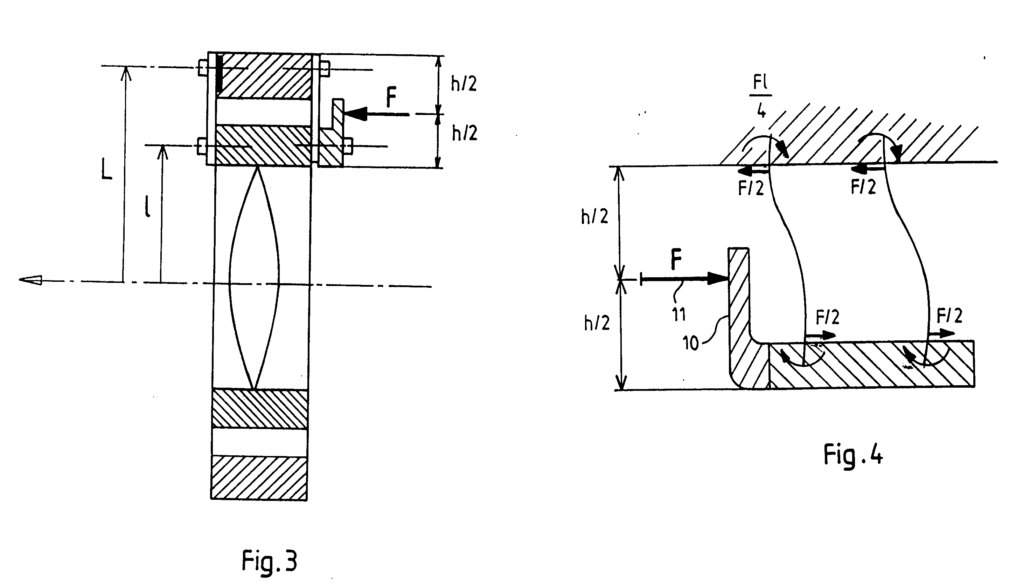

De manière préférée, ainsi que cela est décrit schématiquement par les figures 3 et 4, l'actionneur 11 agit par simple appui sur le flanc 10 à l'encontre du rappel élastique induit par la flexibilité élastique des lames flexibles.

Le guidage proposé par l'invention est obtenu à partir de la flexibilité parallèlement à X-X combinée à leur rigidité en cisaillement dans leur plan, de la paire de lames flexibles encastrées en leurs extrémités respectivement à l'élément fixe et à l'élément mobile de l'instrument optique.

L'application d'un effort sur la virole interne 2, sensiblement au niveau des barrettes de fixation 8A et 8B, induirait, ainsi qu'on peut le vérifier, un effort de traction sur la lame immédiatement adjacente, et un effort de compression sur l'autre lame. Une telle différence de sollicitation sur les deux lames est de nature, compte tenu de l'élasticité en traction/compression des lames dans leur plan, à générer une inclinaison de l'axe de la lentille par rapport à l'axe optique.

Par contre, si l'effort en poussée effectué par l'actionneur est, comme cela est représenté, centré entre les barrettes de fixation 7A et 7B d'une part, et 8A et 8B d'autre part, on peut noter, d'après l'examen de la figure 4, que les deux lames travaillent exactement de la même façon (sans traction ni compression) et assurent ainsi un guidage en déplacement de l'équipage mobile 1 + 2 sans inclinaison par rapport à l'axe optique. On peut vérifier que les efforts se ramènent en chaque zone d'encastrement à une force parallèle à l'axe X-X, de module F/2 et à un couple de module égal Fh/4 si h est la distance entre les zones d'encastrement.

Du fait de leur flexion, les lames flexibles 5 et 6 induisent, bien sûr, un léger écartement des barrettes 8A et 8B par rapport à l'axe optique X-X, induisant ainsi un décentrement entre l'axe de la lentille et cet axe optique. Ce décentrement peut toutefois être maintenu à un niveau très faible compte tenu de ce que celui-ci augmente avec l'amplitude du déplacement parallèle à X (or, ce déplacement est généralement faible, en pratique inférieur à 2 mm dans les mécanismes de refocalisation classiques), et diminue lorsqu'augmente la distance à l'axe X-X (L) des barrettes de fixation 7A et 7B solidaires de la virole externe (or, cette distance peut être grande surtout si, comme cela apparaît aux figures 1 à 3, ces barrettes sont radialement déportées vers l'extérieur par rapport à la virole externe 4).

On appréciera que, selon l'invention, le guidage est de type mécanique sans toutefois faire intervenir ni frottement, ni jeu : ce guidage est en effet réalisé sans l'intervention ni de glissière, ni d'articulation.

Ce guide est en outre de qualité isostatique, c'est-à-dire que, sur le plan des efforts d'interfaces, il est insensible aux dispersions géométriques.

Ce guidage ne nécessite enfin qu'un seul point d'application d'efforts pour piloter le déplacement, sans qu'il y ait donc besoin d'une quelconque synchronisation entre plusieurs actionneurs.

Grâce aux avantages précités, conférant au dispositif de guidage et de commande en mouvement une grande simplicité, une grande fiabilité, avec toutefois un faible encombrement et une masse modérée, l'invention est particulièrement intéressante pour la commande d'équipage optique mobile au sein d'instruments optiques embarqués sur satellite, par exemple en vue de prises de vues.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif pour régler la position d'un objet (1), comportant un élément fixe (4), un élément mobile (2) destiné à supporter ledit objet et des moyens de guidage et de commande en déplacement de l'élément mobile (2) par rapport à l'élément fixe (4), parallèlement à un axe de translation (X-X), les dits moyens comportant au moins une paire de lames planes flexibles parallèles (5, 6), l'une en face de l'autre, transversales à l'axe, et décalées par rapport à l'axe, respectivement encastrées en leurs extrémités, (5A, 5B, 6A, 6B) d'une part dans l'élément mobile (2), d'autre part dans l'élément fixe (4), les distances des zones d'encastrement audit axe de translation étant les mêmes pour chaque lame, caractérisé en ce que :
- l'élément mobile (2) comporte un prolongement transversal (10) dont une extrémité est fixée dans la zone d'encastrement de l'élément mobile (2) et qui s'étend approximativement parallèlement aux lames flexibles en direction de l'élément fixe sur au moins la moitié de la distance transversale (h) séparant les zones d'encastrement des lames flexibles dans l'élément mobile et dans l'élément fixe, et en ce que
- un actionneur (11) est disposé en sorte d'exercer un effort (F) sur ce prolongement, parallèlement à l'axe, sensiblement à mi-chemin transversalement entre ces zones d'encastrement.

2. Dispositif de guidage et de commande en déplacement selon la revendication 1, caractérisé en ce que le prolongement transversal (10) de l'élément mobile se trouve d'un même côté des lames flexibles (5, 6) parallèlement à l'axe.

3. Dispositif de guidage et de commande en déplacement selon la revendication 1 ou la revendication 2, caractérisé en ce que les lames sont élastiques, l'actionneur (11) est en simple appui sur le prolongement (10), parallèlement à l'axe.

4. Dispositif de guidage et de commande en déplacement selon la revendication 3, caractérisé en ce que le prolongement transversal (10) de l'élément mobile se trouve, parallèlement à l'axe, entre l'actionneur et la paire de lames flexibles.

5. Dispositif de guidage et de commande en déplacement selon l'une quelconque des revendications 1 à 4, caractérisé en ce que ledit axe de translation (X-X) étant horizontal, l'élément mobile est suspendu à l'élément fixe par ces lames, lesquelles sont symétriques par rapport à un plan vertical contenant cet axe de translation horizontal.

6. Instrument optique comportant un élément optique mobile et, pour régler la position de cet élément optique, un dispositif conforme à l'une quelconque des revendications 1 à 5.

7. Instrument optique selon la revendication 6, caractérisé en ce que l'élément optique mobile est une bague (2) dans laquelle est montée une lentille.

8. Instrument optique selon la revendication 6 ou la revendication 7, caractérisé en ce que l'axe de translation est horizontal, la bague (2) étant disposée dans un plan vertical.

9. Instrument optique selon la revendication 8, caractérisé en ce que la bague est reliée au bâti par une seule paire de lames flexibles (5, 6), symétriques par rapport à un plan vertical contenant l'axe de translation.

## Patentansprüche

1. Vorrichtung zur Regelung der Stellung eines Objekts (1), umfassend ein feststehendes Element (4), ein bewegliches Element (2), das dazu bestimmt ist, dieses Objekt zu tragen, und Mittel zur Führung und Steuerung der Bewegung des beweglichen Elements (2) bezüglich des feststehenden Elements (4) parallel zu einer Translationsachse (X-X), wobei diese Mittel mindestens ein Paar von ebenen, flexiblen, parallelen Blättern (5, 6) umfassen, die einander gegenüberstehen, quer zur Achse angeordnet sind, bezüglich der Achse versetzt sind und jeweilig an ihren Enden (5A, 5B, 6A, 6B) einerseits im beweglichen Element (2), andererseits im feststehenden Element (4) eingespannt sind, wobei die Abstände der Einspannzonen von dieser Translationsachse bei jedem Blatt dieselben sind, dadurch gekennzeichnet,
daß das bewegliche Element (2) eine Querverlängerung (10) besitzt, deren eines Ende in der Einspannzone des beweglichen Elements (2) befestigt ist und die sich annähernd parallel zu den flexiblen Blättern in Richtung auf das feststehende Element mindestens über die Hälfte des Querabstands (h) zwischen den Einspannzonen der flexiblen Blätter im beweglichen Element und im feststehenden Element erstreckt, und
daß ein Betätigungsorgan (11) so angeordnet ist, daß es auf diese Verlängerung parallel zur Achse in Querrichtung im wesentlichen in der Mitte zwischen diesen Einspannzonen eine Kraft (F) ausübt.

2. Führungs- und Bewegungssteuervorrichtung nach Anspruch 1, dadurch gekennzeichnet, daß die Querverlängerung (10) des beweglichen Elements sich parallel zur Achse auf der gleichen Seite der flexiblen Blätter (5, 6) befindet.

3. Führungs- und Bewegungssteuervorrichtung nach Anspruch 1 oder 2, dadurch gekennzeichnet, daß die Blätter elastisch sind und das Betätigungsorgan (11) eine einfache Abstützung an der Verlängerung (10) parallel zur Achse ist.

4. Führungs- und Bewegungssteuervorrichtung nach Anspruch 3, dadurch gekennzeichnet, daß die Querverlängerung (10) des beweglichen Elements parallel zur Achse sich zwischen dem Betätigungsorgan und dem Paar von flexiblen Blättern befindet.

5. Führungs- und Bewegungssteuervorrichtung nach einem der Ansprüche 1 bis 4, dadurch gekennzeichnet, daß, wenn die Translationsachse (X-X) horizontal ist, das bewegliche Element am feststehenden Element durch diese Blätter aufgehängt ist, die bezüglich einer diese horizontale Translationsachse enthaltenden Ebene symmetrisch sind.

6. Optisches Instrument mit einem beweglichen optischen Element und zur Regelung der Stellung dieses optischen Elements einer Vorrichtung gemäß einem der Ansprüche 1 bis 5.

7. Optisches Instrument nach Anspruch 6, dadurch gekennzeichnet, daß das bewegliche optische Element ein Ring (2) ist, in dem eine Linse montiert ist.

8. Optisches Instrument nach Anspruch 6 oder 7, dadurch gekennzeichnet, daß die Translationsachse horizontal ist, wobei der Ring (2) in einer vertikalen Ebene angeordnet ist.

9. Optisches Instrument nach Anspruch 8, dadurch gekennzeichnet, daß der Ring mit dem Gestell durch ein einziges Paar von flexiblen Blättern (5, 6) verbunden ist, die bezüglich einer die Translationsachse enthaltenden vertikalen Ebene symmetrisch sind.

## Claims

1. Device for controlling the position of an object (1), comprising a fixed member (4), a mobile member (2) adapted to support said object and means for guiding and controlling displacement of the mobile member (2) relative to the fixed member (4) relative to a translation axis (X-X), said means including at least one pair of parallel flexible flat plates (5, 6) facing each other transversely to the axis and offset relative to the axis having their ends (5a, 5b, 6a, 6b) respectively built into the mobile member (2) and the fixed member (4), the distances of the built-in areas from said translation axis being the same for each plate, characterized in that:
- the mobile member (2) includes a transverse extension (10) one end of which is fixed into the built-in area of the mobile member (2) and which is approximately parallel to the flexible blades in the direction of the fixed member over at least half the transverse distance (h) between the built-in areas of the flexible blades into the mobile member and into the fixed member, and in that
- an actuator (11) is adapted to apply force (F) to said extension parallel to the axis substantially halfway in the transverse direction between said built-in areas.

2. Displacement guidance and control device according to claim 1 characterized in that the transverse extension (10) of the mobile member is to the same side of the flexible blades (5, 6) in the direction parallel to the axis.

3. Displacement guidance and control device according to claim 1 or claim 2 characterized in that the actuator (11) is in simple bearing engagement with the extension (10), parallel to the axis, and the flexible plates are resilient.

4. Displacement guidance and control device according to claim 3 characterized in that the transverse extension (10) of the mobile member is located, in the direction parallel to the axis, between the actuator and the pair of flexible plates.

5. Displacement guidance and control device according to any one of claims 1 to 4 characterized in that said translation axis (X-X) is horizontal and the mobile member is suspended from the fixed member by said plates which are symmetrical relative to a vertical plane containing said horizontal translation axis.

6. Optical instrument comprising a mobile optical member and, for controlling the position of said optical member, a device according to any one of claims 1 to 5.

7. Optical instrument according to claim 6 characterized in that the mobile optical member is a ring (2) in which a lens is mounted.

8. Optical instrument according to claim 6 or claim 7 characterized in that the translation axis is horizontal and the ring (2) is disposed in a vertical plane.

9. Optical instrument according to claim 8 characterized in that the ring is linked to the frame by a single pair of flexible plates (5, 6) symmetrical to a vertical plane containing the translation axis.
